# FASCICULE DE BREVET EUROPEEN

(11) **EP 3 980 685 B1**
(45) Date de publication et mention de la délivrance du brevet: **26.07.2023**
(21) Numéro de dépôt: 20739751.4
(22) Date de dépôt: 25.05.2020
(51) Int. Cl.: F21S 45/60, F21S 41/25, F21S 41/13, F21S 41/147, F21S 41/148, F21S 41/255, F21S 41/265, F21S 41/275, B60Q 1/00

(54) **BLOC OPTIQUE DE VÉHICULE À LENTILLE EXTERNE CHAUFFÉE PAR DES PHOTONS INFRAROUGES**
OPTISCHE EINHEIT FÜR FAHRZEUGE MIT EINER DURCH INFRAROTSTRAHLEN BEHEIZTEN LINSE
OPTICAL UNIT FOR VEHICLES COMPRISING A HEATED LENS BY INFRARED RADIATION

(30) Priorité: 04.06.2019 FR 1905887
(43) Date de publication de la demande: 13.04.2022
(73) Titulaire: PSA Automobiles SA, 78300 Poissy (FR)
(72) Inventeur: ROYER, Guillaume, 91680 BRUYERES LE CHATEL (FR); MOLTO, Valerie, 78000 VERSAILLES (FR); CHUFFART, Frederic, 95530 LA FRETTE SUR SEINE (FR)
(86) Numéro de dépôt international: PCT/FR2020/050867
(87) Numéro de publication internationale: WO 2020/245524

(56) Documents cités:
- CN-A- 108 679 572
- DE-A1-102008 057 355
- DE-A1-102010 013 559
- DE-A1-102011 004 086
- DE-A1-102011 080 488
- JP-A- 2017 107 646

## Description

### Domaine technique de l'invention

L'invention concerne les blocs optiques destinés à équiper des véhicules et dépourvus de glace de protection.

### Etat de la technique

Comme le sait l'homme de l'art, un bloc optique de véhicule, dépourvu de glace de protection à l'interface avec l'air extérieur, comprend une source de photons visibles, une lentille interne assurant une première mise en forme des photons, et une lentille externe assurant une seconde mise en forme des photons issus de la lentille interne et délivrant ces photons mis en forme sur une face avant au contact de l'air extérieur.

La face avant de la lentille externe assurant la fonction de glace de protection, elle est donc refroidie par l'air extérieur, et donc, lorsque ce dernier est froid (typiquement inférieur à 5°C), de la glace ou de la neige peut se déposer sur elle, ce qui peut dégrader les caractéristiques de chaque fonction photométrique d'éclairage ou de signalisation que son bloc optique assure. On est donc contraint de réchauffer cette lentille externe si l'on veut maintenir constantes les caractéristiques des fonctions photométriques, en particulier lorsqu'il s'agit d'une fonction de feu de route, d'une fonction de feu de croisement (ou code) ou d'une fonction de feu antibrouillard.

Actuellement ce réchauffage se fait activement au moyen de résistances chauffantes situées à proximité, ou au contact, de la partie périphérique de la lentille externe, ce qui augmente l'encombrement du bloc optique, complexifie l'électrification interne et les circuits de commande de ce dernier, et peut dégrader l'esthétisme.

Il a certes été proposé, notamment dans le document brevet DE-A1 102010013559, d'équiper certains blocs optiques de véhicule d'un autre type de moyen de chauffage, et plus précisément d'une source délivrant des photons infrarouges. Cependant, il s'agit d'un bloc optique ne comprenant qu'une lentille interne avec en aval une glace de protection munie sur sa face arrière d'un matériau absorbant les photons infrarouges. Cette solution n'est donc pas applicable aux blocs optiques dépourvus de glace de protection, et de surcroît son efficacité est relativement faible du fait que le chauffage induit par l'absorption des photons infrarouges se fait en surface (dans la fine couche de matériau absorbant déposée sur la face arrière) et non pas dans la masse.

L'invention a donc notamment pour but d'améliorer la situation dans le cas d'un bloc optique dépourvu de glace de protection.

### Présentation de l'invention

Elle propose notamment à cet effet un bloc optique destiné à équiper un véhicule et comprenant une première source délivrant des premiers photons dans le domaine visible, une lentille interne assurant une première mise en forme des premiers photons, une lentille externe assurant une seconde mise en forme des premiers photons issus de la lentille interne et délivrant ces premiers photons mis en forme sur une face avant au contact d'un air extérieur, et une seconde source délivrant des seconds photons dans le domaine infrarouge.

Ce bloc optique se caractérise par le fait que sa lentille externe est réalisée par bi-injection dans une partie centrale d'une première matière transparente aux premiers et seconds photons, et dans une partie périphérique entourant au moins partiellement la partie centrale d'une seconde matière absorbant les seconds photons pour produire de l'énergie thermique induisant une augmentation d'une température de la lentille externe propre à empêcher le dépôt de glace ou de neige sur sa face avant.

Grâce à cette production d'énergie thermique dans la masse (ou l'épaisseur) de la lentille externe (par conversion des seconds photons), on réchauffe de façon assez homogène la partie centrale (dans sa masse (ou son épaisseur)), par conduction, ce qui permet d'empêcher le dépôt de glace ou de neige sur sa face avant.

Le bloc optique selon l'invention peut comporter d'autres caractéristiques qui peuvent être prises séparément ou en combinaison, et notamment :
- la seconde matière peut avoir une couleur noire ;
- la partie périphérique de la lentille externe peut entourer entièrement la partie centrale ;
- sa seconde source peut être installée dans une zone située de façon excentrée entre ses lentilles interne et externe ;
- sa seconde source peut émettre des seconds photons ayant une longueur d'onde égale à 940 nm ou 1670 nm ;
- sa seconde source peut comprendre au moins une diode électroluminescente (ou LED) ;
- la face avant de sa lentille externe peut être revêtue dans une partie au moins de la partie centrale de noir de fumée absorbant les seconds photons pour produire de l'énergie thermique induisant une augmentation de la température de la lentille externe propre à empêcher le dépôt de glace ou de neige sur la face avant ;
- il peut constituer un projecteur assurant avec les premiers photons délivrés par la face avant de sa lentille externe au moins une fonction photométrique d'éclairage et/ou de signalisation.

L'invention propose également un véhicule, éventuellement de type automobile, et comprenant au moins un bloc optique du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue en perspective, un exemple de réalisation d'un bloc optique selon l'invention, et
[Fig. 2] illustre schématiquement et fonctionnellement, dans une vue en coupe, un exemple de réalisation d'un bloc optique selon l'invention.

### Description détaillée de l'invention

L'invention a notamment pour but de proposer un bloc optique BO destiné à équiper un véhicule, et dépourvu de glace de protection mais muni de moyens de chauffage efficaces pour éviter le dépôt de glace ou de neige sur sa face avant FV.

Dans ce qui suit, on considère, à titre d'exemple non limitatif, que le bloc optique BO est destiné à équiper un véhicule de type automobile, comme par exemple une voiture. Mais l'invention n'est pas limitée à ce type de véhicule. En effet, elle concerne n'importe quel véhicule (terrestre, maritime (ou fluvial), ou aérien) devant comprendre au moins un bloc optique devant assurer au moins une fonction photométrique d'éclairage et/ou de signalisation.

Par ailleurs, on considère dans ce qui suit, à titre d'exemple non limitatif, que le bloc optique BO assure au moins une fonction photométrique d'éclairage. Mais il pourrait assurer au moins une fonction photométrique de signalisation ou bien au moins une fonction photométrique d'éclairage et au moins une fonction photométrique de signalisation. Par exemple, la fonction photométrique de signalisation peut être une fonction de feu de route ou une fonction de feu de croisement (ou code) ou encore une fonction de feu antibrouillard.

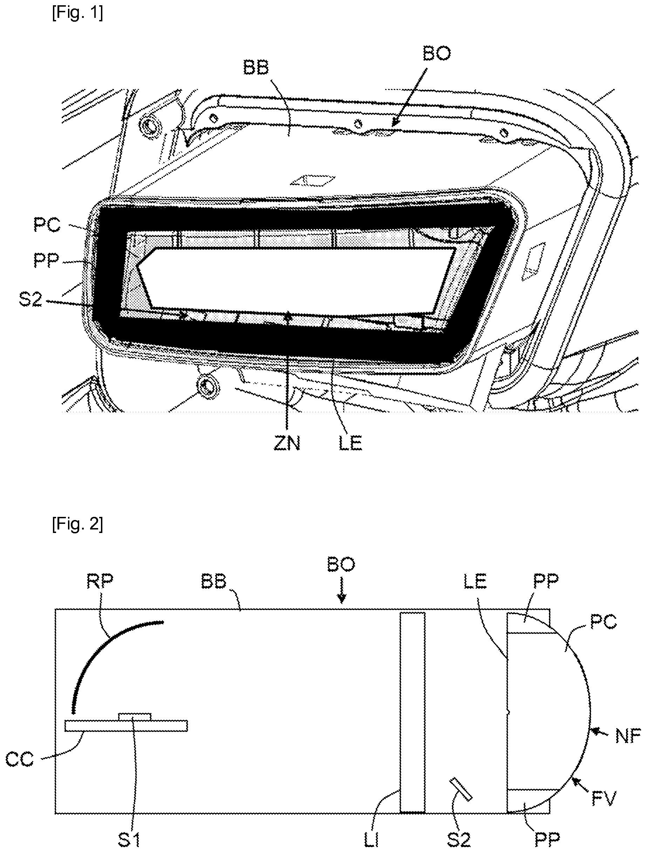

On a schématiquement représenté sur la figure 1 un exemple de réalisation d'un bloc optique BO selon l'invention installé dans une partie avant d'un véhicule où il constitue un projecteur (ou phare).

Comme cela apparaît mieux sur la figure 2, un bloc optique BO, selon l'invention, comprend au moins une première source S1, une lentille interne LI, une lentille externe LE et une seconde source S2.

De préférence, et comme illustré non limitativement sur les figures 1 et 2, le bloc optique BO comprend aussi un boîtier BB dans lequel sont notamment installées les première S1 et seconde S2 sources et les lentilles interne LI et externe LE. Ce boîtier BB peut, par exemple, être réalisé en matière plastique. Mais il pourrait aussi être réalisé en métal.

La première source S1 est agencée de manière à délivrer (ou émettre) des premiers photons dont les longueurs d'onde appartiennent au domaine visible. Par exemple, cette première source S1 peut comprendre au moins une diode électroluminescente (ou LED (« Light Emitting Diode »)) ou au moins une diode laser. En variante, elle pourrait comprendre au moins une lampe (éventuellement au xénon).

Egalement par exemple, et comme illustré non limitativement sur la figure 2, le bloc optique BO peut aussi comprendre une carte à circuits imprimés CC, éventuellement de type PCB (« Printed Circuit Board »), et sur laquelle est installée la première source S1. Cette carte à circuits imprimés CC est solidarisée fixement à une face interne du boîtier BB.

La lentille interne LI est agencée de manière à assurer une première mise en forme des premiers photons qui sont issus de la première source S1.

Par exemple, et comme illustré non limitativement sur la figure 2, le bloc optique BO peut aussi comprendre un réflecteur RP chargé de réfléchir les premiers photons émis par la première source S1 vers la lentille interne LI. Ce réflecteur RP est solidarisé fixement à la face interne du boîtier BB.

La lentille externe LE est agencée de manière à assurer une seconde mise en forme des premiers photons qui sont issus de la lentille interne LI et à délivrer ces premiers photons mis en forme sur une face avant FV qui est au contact de l'air extérieur (et donc qui assure l'interface avec ce dernier). On comprendra que ces premiers photons qui sortent par la face avant FV sont ceux qui assurent, ici, au moins une fonction photométrique d'éclairage et/ou de signalisation.

La seconde source S2 est agencée de manière à délivrer des seconds photons dont les longueurs d'onde appartiennent au domaine infrarouge, en direction de la face arrière de la lentille externe LE (opposée à sa face avant FV), afin qu'ils coopèrent avec cette lentille externe LE.

Par exemple, cette seconde source S2 peut comprendre au moins une diode électroluminescente (ou LED) ou au moins une diode laser.

Egalement par exemple, cette seconde source S2 peut émettre des seconds photons ayant une longueur d'onde égale à 940 nm ou 1670 nm.

La lentille externe LE est de plus réalisée par bi-injection d'une première matière dans une partie centrale PC et d'une seconde matière dans une partie périphérique PP entourant au moins partiellement cette partie centrale PC, comme illustré sur les figures 1 et 2.

La première matière est transparente pour les premiers et seconds photons (et donc les laisse passer sans les absorber). Par exemple, elle peut avoir une couleur cristal. Egalement par exemple, il peut s'agir de polycarbonate (ou PC (notamment un « PC clear »)) ou de poly-méthacrylate de méthyle (ou PMMA) plexiglass.

La seconde matière absorbe les seconds photons pour produire de l'énergie thermique qui induit une augmentation de la température de la lentille externe LE propre à empêcher le dépôt de glace ou de neige sur sa face avant FV.

On comprendra que les seconds photons sont convertis en énergie thermique dans la masse (ou l'épaisseur) de la lentille externe LE, à la périphérie (PP) de cette dernière (LE), et cette énergie thermique se propage par conduction dans la masse (ou l'épaisseur) de la partie centrale PC en la réchauffant de façon assez homogène, permettant ainsi d'empêcher le dépôt de glace ou de neige sur sa face avant FV.

De préférence, et comme illustré non limitativement sur les figures 1 et 2, la seconde matière peut avoir une couleur noire. Cela permet d'augmenter l'efficacité de la conversion des seconds photons en énergie thermique du fait que le noir absorbe l'énergie.

La seconde matière peut, par exemple, être identique à la première matière, à l'exception de sa couleur qui doit alors provoquer l'absorption des seconds photons infrarouges. Mais dans une variante la seconde matière pourrait être différente de la première matière (avec ou sans la même couleur que celle de cette dernière), et dans ce cas l'une des propriétés physiques est l'absorption des seconds photons infrarouges. Ainsi, il peut, par exemple, s'agir de polycarbonate (notamment un « PC black »)) ou de poly-méthacrylate de méthyle.

Egalement de préférence, et comme illustré non limitativement sur la figure 1, la partie périphérique PP de la lentille externe LE peut entourer entièrement la partie centrale PC. Cela permet d'augmenter l'efficacité du chauffage de la lentille externe LE, du fait que la conversion des seconds photons en énergie thermique se fait alors sur toute la périphérie de la lentille externe LE.

On notera, comme illustré non limitativement sur la figure 2, que la seconde source S2 peut être installée dans une zone qui est située de façon excentrée entre les lentilles interne LI et externe LE. Ce positionnement excentré par rapport à l'axe optique du bloc optique BO permet de rendre quasi-invisible de l'extérieur la seconde source S2, tout en évitant d'avoir à utiliser un autre réflecteur pour réfléchir les seconds photons vers la face arrière de la lentille externe LE.

On notera également, comme illustré non limitativement sur les figures 1 et 2, que la face avant FV de la lentille externe LE peut être revêtue dans une partie au moins de la partie centrale PC de noir de fumée (ou de carbone) NF. Ce noir de fumée (ou de carbone) NF absorbe les seconds photons pour produire de l'énergie thermique qui induit une augmentation de la température de la lentille externe LE propre à empêcher le dépôt de glace ou de neige sur sa face avant FV. On comprendra que cela permet d'utiliser aussi pour le chauffage les seconds photons qui ne passent pas par la partie périphérique PP et qui seraient perdus car non absorbés par la première matière de la partie centrale PC. Cette option permet donc d'augmenter l'efficacité du chauffage de la lentille externe LE.

Pa exemple, le noir de fumée NF peut être injecté directement dans la première matière afin d'éviter qu'il ne soit endommagé par des agressions extérieures (pluie, neige, cailloux, lavages).

Par exemple, le fonctionnement de la seconde source S2 peut être déclenché dès que la température à l'extérieur du véhicule est inférieure à un seuil prédéfini. Par exemple, ce seuil peut être compris entre 3°C et 6°C.

## Revendications

1. Bloc optique (BO) destiné à équiper un véhicule et comprenant une première source (S1) délivrant des premiers photons dans le domaine visible, une lentille interne (LI) assurant une première mise en forme des premiers photons, une lentille externe (LE) assurant une seconde mise en forme des premiers photons issus de ladite lentille interne (LI) et délivrant ces premiers photons mis en forme sur une face avant (FV) au contact d'un air extérieur, et une seconde source (S2) délivrant des seconds photons dans le domaine infrarouge, **caractérisé en ce que** ladite lentille externe (LE) est réalisée par bi-injection dans une partie centrale (PC) d'une première matière transparente auxdits premiers et seconds photons, et dans une partie périphérique (PP) entourant au moins partiellement ladite partie centrale (PC) d'une seconde matière absorbant lesdits seconds photons pour produire de l'énergie thermique induisant une augmentation d'une température de ladite lentille externe (LE) propre à empêcher le dépôt de glace ou de neige sur ladite face avant (FV).

2. Bloc optique selon la revendication 1, **caractérisé en ce que** ladite seconde matière a une couleur noire.

3. Bloc optique selon la revendication 1 ou 2, **caractérisé en ce que** ladite partie périphérique (PP) entoure entièrement ladite partie centrale (PC).

4. Bloc optique selon l'une des revendications 1 à 3, **caractérisé en ce que** ladite seconde source (S2) est installée dans une zone située de façon excentrée, par rapport à un axe optique du bloc optique (BO), entre lesdites lentilles interne (LI) et externe (LE).

5. Bloc optique selon l'une des revendications 1 à 4, **caractérisé en ce que** ladite seconde source (S2) émet des seconds photons ayant une longueur d'onde égale à 940 nm ou 1670 nm.

6. Bloc optique selon l'une des revendications 1 à 5, **caractérisé en ce que** ladite seconde source (S2) comprend au moins une diode électroluminescente.

7. Bloc optique selon l'une des revendications 1 à 6, **caractérisé en ce que** ladite face avant (FV) est revêtue dans une partie au moins de ladite partie centrale (PC) de noir de fumée (NF) absorbant lesdits seconds photons pour produire de l'énergie thermique induisant une augmentation de la température de ladite lentille externe (LE) propre à empêcher le dépôt de glace ou de neige sur ladite face avant (FV).

8. Bloc optique selon l'une des revendications 1 à 7, **caractérisé en ce qu'**il constitue un projecteur assurant avec lesdits premiers photons délivrés par ladite face avant (FV) au moins une fonction photométrique d'éclairage et/ou de signalisation.

9. Véhicule, **caractérisé en ce qu'**il comprend au moins un bloc optique (BO) selon l'une des revendications précédentes.

10. Véhicule selon la revendication 9, **caractérisé en ce qu'**il est de type automobile.

## Patentansprüche

1. Optischer Block (BO), der dazu bestimmt ist, ein Fahrzeug auszustatten, und der eine erste Quelle (S1), die erste Photonen im sichtbaren Bereich liefert, eine innere Linse (LI), die eine erste Formung der ersten Photonen gewährleistet, eine äußere Linse (LE), die eine zweite Formung der von der inneren Linse (LI) kommenden ersten Photonen gewährleistet und diese ersten geformten Photonen auf einer Vorderseite (FV) im Kontakt mit einer Außenluft liefert, und eine zweite Quelle (S2), die zweite Photonen im Infrarotbereich liefert, umfasst, **dadurch gekennzeichnet, dass** die äußere Linse (LE) durch Bi-Injektion in einen zentralen Teil (PC) eines ersten Materials, das für die ersten und zweiten Photonen transparent ist, und in einen peripheren Teil (PP), der den zentralen Teil (PC) zumindest teilweise umgibt, eines zweiten Materials, das die zweiten Photonen absorbiert, hergestellt wird, um thermische Energie zu erzeugen, die einen Anstieg einer Temperatur der äußeren Linse (LE) induziert, die geeignet ist, die Ablagerung von Eis oder Schnee auf der Vorderseite (FV) zu verhindern.

2. Optischer Block nach Anspruch 1, **dadurch gekennzeichnet, dass** das zweite Material eine schwarze Farbe hat.

3. Optischer Block nach Anspruch 1 oder 2, **dadurch gekennzeichnet, dass** der Umfangsabschnitt (PP) den Mittelabschnitt (PC) vollständig umgibt.

4. Optischer Block nach einem der Ansprüche 1 bis 3, **dadurch gekennzeichnet, dass** die zweite Quelle (S2) in einem Bereich installiert ist, der in Bezug auf eine optische Achse des optischen Blocks (BO) exzentrisch zwischen der inneren (LI) und der äußeren (LE) Linse liegt.

5. Optischer Block nach einem der Ansprüche 1 bis 4, **dadurch gekennzeichnet, dass** die zweite Quelle (S2) zweite Photonen mit einer Wellenlänge von 940 nm oder 1670 nm emittiert.

6. Optischer Block nach einem der Ansprüche 1 bis 5, **dadurch gekennzeichnet, dass** die zweite Quelle (S2) mindestens eine lichtemittierende Diode umfasst.

7. Optischer Block nach einem der Ansprüche 1 bis 6, **dadurch gekennzeichnet, dass** die Vorderseite (FV) zumindest in einem Teil des Mittelteils (PC) mit Ruß (NF) beschichtet ist, der die zweiten Photonen absorbiert, um thermische Energie zu erzeugen, die eine Erhöhung der Temperatur der äußeren Linse (LE) induziert, die geeignet ist, die Ablagerung von Eis oder Schnee auf der Vorderseite (FV) zu verhindern.

8. Optischer Block nach einem der Ansprüche 1 bis 7, **dadurch gekennzeichnet, dass** er einen Scheinwerfer bildet, der mit den ersten Photonen, die von der Vorderseite (FV) geliefert werden, mindestens eine photometrische Beleuchtungs- und/oder Signalfunktion gewährleistet.

9. Fahrzeug, **dadurch gekennzeichnet, dass** es mindestens einen optischen Block (BO) nach einem der vorhergehenden Ansprüche umfasst.

10. Fahrzeug nach Anspruch 9, **dadurch gekennzeichnet, dass** es vom Typ Automobil ist.

## Claims

1. Optical block (BO) intended to equip a vehicle and comprising a first source (S1) delivering first photons in the visible range, an internal lens (LI) ensuring a first shaping of the first photons, an external lens (LE) ensuring a second shaping of the first photons coming from said internal lens (LI) and delivering these shaped first photons on a front face (FV) in contact with an external air, and a second source (S2) delivering second photons in the infrared range, **characterized in that** said external lens (LE) is produced by bi-injection into a central portion (PC) of a first material transparent to said first and second photons, and into a peripheral portion (PP) at least partially surrounding said central portion (PC) of a second material absorbing said second photons to produce thermal energy inducing an increase in a temperature of said external lens (LE) suitable for preventing the deposition of ice or snow on said front face (FV).

2. Optical block according to claim 1, **characterized in that** said second material has a black color.

3. Optical block according to claim 1 or 2, **characterized in that** said peripheral portion (PP) completely surrounds said central portion (PC).

4. Optical block according to one of claims 1 to 3, **characterized in that** said second source (S2) is installed in a zone located eccentrically, with respect to an optical axis of the optical block (BO), between said inner (L!) and outer (LE) lenses.

5. Optical block according to one of claims 1 to 4, **characterized in that** said second source (S2) emits second photons having a wavelength equal to 940 nm or 1670 nm.

6. Optical block according to one of claims 1 to 5, **characterized in that** said second source (S2) comprises at least one light-emitting diode.

7. Optical block according to one of claims 1 to 6, **characterized in that** said front face (FV) is coated in at least part of said central portion (PC) with lampblack (NF) absorbing said second photons to produce thermal energy inducing an increase in the temperature of said external lens (LE) suitable for preventing the deposition of ice or snow on said front face (FV).

8. Optical block according to one of claims 1 to 7, **characterized in that** it constitutes a projector ensuring with said first photons delivered by said front face (FV) at least one photometric lighting and/or signalling function.

9. Vehicle, **characterized in that** it comprises at least one optical unit (BO) according to one of the preceding claims.

10. Vehicle according to claim 9, **characterized in that** it is of the automobile type.
